# EUROPEAN PATENT APPLICATION

(11) **EP 2 506 497 A1**
(43) Date of publication of application: **03.10.2012**
(21) Application number: 11305379.7
(22) Date of filing: 31.03.2011
(51) Int. Cl.: H04L 12/24, H04M 3/42

(54) **Deactivation of XDSL unused ports**

(71) Applicant: FRANCE TELECOM, 75015 Paris (FR)
(72) Inventor: Zawadzki, Konrad, 613 03-149 Warzawa (PL); Rybak, Marcin, 29 05-420 Józefów (PL); Stolarek, Piotr, 26 26-415 Klwów (PL)
(74) Representative: Cabinet Plasseraud

(57) **Abstract**

The disclosure relates to a method for reducing power consumption of a multiplexer-dispatcher device, the method comprising, for a downstream port of the multiplexer-dispatcher device, obtaining at least one of the administrative status of the port, the operational status of the port, and the service configuration status for the port. The method further comprises shutting down the port if the three following conditions are cumulatively met: the administrative status of the port is: port enabled, the operational status of the port is: port disconnected, and there is no configured service. The disclosure also relates to a computer program, a storage medium, a multiplexer-dispatcher device, a computer and a system comprising a multiplexer-dispatcher device and a computer.

## Description

The disclosure generally relates to power management of multiplexer-dispatcher devices, in particular DSLAMs (Digital Subscriber Line Access Multiplexers).

A DSLAM is a well-known network device used for connecting multiple Digital Subscriber Lines (DSLs) to a network. A DSLAM collects data traffic from multiple sources (typically different subscribers) through respective DSLs into a centralized point so that it can be transported to a piece of network equipment over a connection which is typically based on a protocol such as Frame Relay, ATM, or Ethernet.

Each DSL typically corresponds to a telephone line, and is typically wired in the form of a twisted pair cable. The DSLAM may typically connect multiple DSLs to an Internet backbone line using multiplexing techniques.

DSLAMs may typically be installed in telephone exchanges, and serve multiple telephone subscribers.

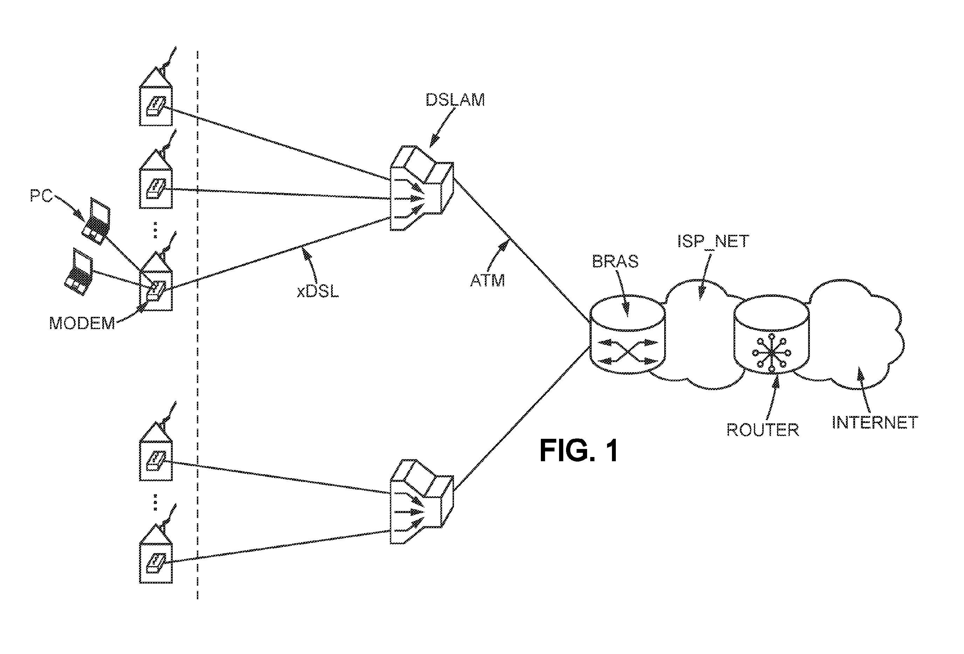

Figure 1 illustrates a typical network architecture, in which multiple houses are equipped with respective xDSL modems, each xDSL modem of a group of houses being connected to a respective DSLAM through a telephone line of the house. Each house corresponds to a telephone subscriber.

The DSLAMs of Figure 1 are connected through an ATM link to a BRAS (broadband remote access server) which routes traffic (to and from the DSLAM) via an ISP (Internet Service Provider) network ISP_NET.

The BRAS serves multiple DSLAMs (each DSLAM serving multiple subscribers).

The BRAS provides a logical network termination for the xDSL modem of each subscriber.

An xDSL modem may comprise a router in order to enable multiple computers of the house (e.g. a laptop PC of the parents and a laptop of the children, as illustrated on Figure 1) to connect to the Internet through the same xDSL subscription.

A DSLAM comprises at least an upstream port, which may be used for communicating with a BRAS (e.g. via ATM, or gigabit Ethernet, or multi-gigabit fiber optic links), and several downstream ports (each downstream port being used to connect a DSL).

Subsets of downstream ports can be grouped together on a DSLAM aggregation card.

A typical aggregation card may have twenty four ports (i.e. serve up to twenty four subscribers), although the number of ports per aggregation card may vary. A DSLAM may comprise many aggregation cards.

A problem with DSLAMs is that they consume a lot of electric power. Certain equipment manufacturers (e.g. Huawei) have proposed DSLAMs comprising a function such that when none of the ports of a given aggregation card of the DSLAM are used, the whole aggregation card is powered down.

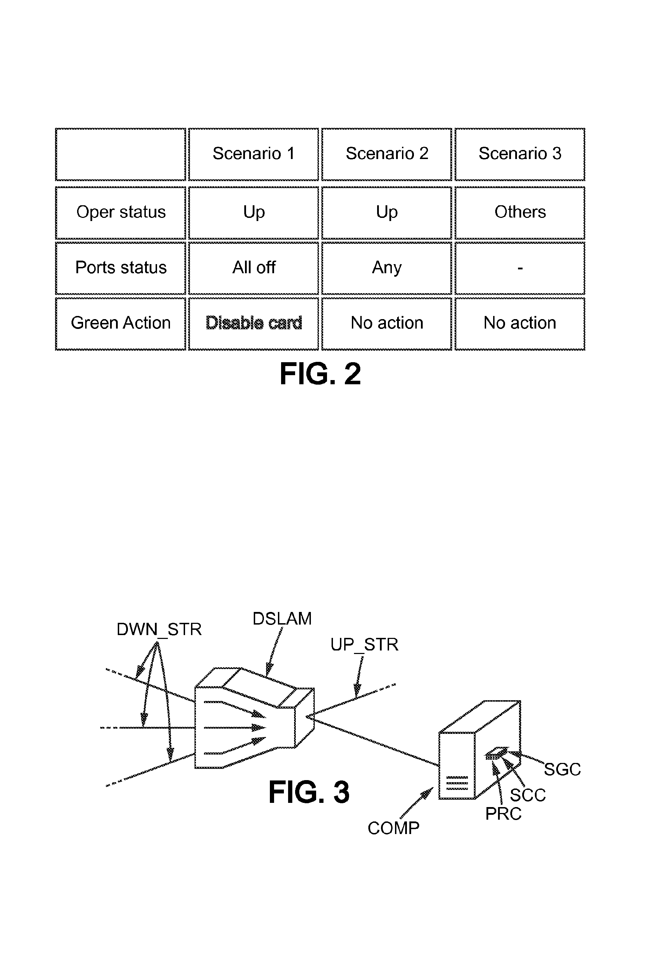

To be more specific, as illustrated on Figure 2, it is proposed to check the operational status of the aggregation card, and the port status of all ports of the aggregation card.

If the operational status of the aggregation card is UP, and the port status of all ports of the aggregation card is OFF (which corresponds to scenario 1 on Figure 2), then the aggregation card is powered down. Otherwise, no action is taken (scenario 2 and 3 on Figure 2).

This is advantageous, but the electric power that is required for operating a DSLAM remains high.

Some solutions have been proposed (by manufacturers such as DLINK, NETGEAR or ZYXEL) in order to optimize power consumption by Ethernet switches by disconnecting ports. However, such solutions are not applicable to DSLAMs.

The invention seeks to improve the situation.

One aspect of the invention relates to a method for reducing power consumption of a multiplexer-dispatcher device, the method comprising, for a downstream port of the multiplexer-dispatcher device, obtaining at least one of:
- the administrative status of the port,
- the operational status of the port, and
- the service configuration status for the port,
   and shutting down the port if the three following conditions are cumulatively met:
- the administrative status of the port is: port enabled,
- the operational status of the port is: port disconnected, and
- there is no configured service.

This is advantageous as it reduces the amount of energy required to operate the multiplexer-dispatcher device. Accordingly, it allows scaling down power requirements for backup power equipment. It also reduces the amount of heat generated by multiplexer-dispatcher devices and accordingly reduces the requirements for air-conditioning equipment and other cooling systems. It overall reduces the TCO (total cost of ownership) of the network infrastructure, which, for a major network operator, may comprise hundreds of thousands of DSLAMs.

Another aspect of the invention relates to a computer program comprising one or more stored sequences of instructions that are accessible to a processor and which, when executed by the processor, cause the processor to perform a method according to a possible embodiment of the invention.

Another aspect of the invention relates to a non-transitory computer-readable storage medium storing a computer program according to a possible embodiment of the invention.

Another aspect of the invention relates to a multiplexer-dispatcher device comprising a downstream port, a status gathering circuit, a status checking circuit, and a power reduction circuit, wherein:
the status gathering circuit is arranged to obtain:
   - the administrative status of the port,
   - the operational status of the port, and
   - the service configuration status for the port,
the status checking circuit is arranged to verify whether the following conditions are cumulatively met:
   - the administrative status of the port is: port enabled,
   - the operational status of the port is: port disconnected, and
   - there is no configured service,
and the power reduction circuit is arranged to shutdown the port if the status checking circuit indicates that the three conditions are cumulatively met.

Another aspect of the invention relates to a computer for managing the power consumption of a multiplexer-dispatcher device, wherein the computer comprises a status gathering circuit, a status checking circuit, and a power reduction circuit, and wherein:
the status gathering circuit is arranged to obtain:
   - the administrative status of a downstream port of the multiplexer-dispatcher device,
   - the operational status of the port, and
   - the service configuration status for the port,
the status checking circuit is arranged to verify whether the following conditions are cumulatively met:
   - the administrative status of the port is: port enabled,
   - the operational status of the port is: port disconnected, and
   - there is no configured service,
and the power reduction circuit is arranged to shutdown the port if the status checking circuit indicates that the three conditions are cumulatively met.

Another aspect of the invention relates to a system comprising a computer according to a possible embodiment of the invention and a multiplexer-dispatcher device.

Other aspects and advantages of the invention will become apparent from the following detailed description of specific embodiments of the invention, and the accompanying drawings, in which:
- Figure 1 represents a known network architecture based on DSLAMs,
- Figure 2 represents a known solution for reducing power consumption of a DSLAM,
- Figure 3 represents a. system according to a possible embodiment of the invention,
- Figure 4, represents different scenarios in a possible embodiment of the invention, one of which is associated with a "green" action (shutting down a port in order to save energy) and
- Figure 5 represents the main steps of a method according to a possible embodiment of the invention.

According to a first embodiment, a method for reducing power consumption of a multiplexer-dispatcher device comprises, for a downstream port of the multiplexer-dispatcher device, obtaining at least one of:
- the administrative status of the port,
- the operational status of the port, and
- the service configuration status for the port.

The administrative status is typically: enabled or disabled. However other statuses are conceivable (e.g. test mode). The port is said to be enabled when it is powered up (it may have been initialized and configured).

The operational status is typically: connected or disconnected. However other statuses are conceivable (e.g. debugging). The port is in connected status when it is connected to a DSL device which is typically a DSL modem, such as an ADSL modem or a VDSL modem, for example. ADSL means any type of ADSL from the ADSL standard family, such as ADSL "1", ADSL2, or ADSL2Plus, as specified for example in ITU-T G 992.1, or ITU-T G 992.3, or ITU-T G 992.3L, or ITU-T G 991.5, etc. Similarly, VDSL means any type of VDSL from the VDSL standard family, such as VDSL "1", or VDSL2 as specified for example in ITU-T G 993.1, or ITU-T G 993.2, etc. Other DSL techniques are usable, for example HDSL, HDSL2, IDSL, MSDSL, PDSL, RADSL, SDSL, SHDSL or UDSL.

A subscriber may disconnect his DSL modem, for any reason, either by accident (e.g. by accidentally pulling the power plug of the modem) or on purpose (e.g. to connect the modem to a different socket in a different room of an apartment, or to temporarily facilitate housekeeping). The port may also be in disconnected status if the DSL modem fails for any reason, or in case of a power outage in the premises of the subscriber (a DSL modem being typically powered by means other than the telephone line). In such situations, although the corresponding port of the multiplexer-dispatcher device is in an "enabled" administrative status, it ends up being in "disconnected" operational status.

The service configuration status for the port reflects the services that are configured for the port. In a possible embodiment, the services correspond to connectivity services which might reflect for example the types of protocols and the protocol encapsulations that may be used to connect the modem to the multiplexer-dispatcher device. For example, the services may correspond to ATM virtual circuits or Ethernet VLAN levels. Indeed, xDSL modems may connect to a BRAS via the multiplexer-dispatcher device using a variety of protocols, for example PPP over Ethernet (PPPoE), PPP over ATM (PPPoA) encapsulated sessions, bridged Ethernet over ATM or Frame Relay (RFC 1483/RFC 1490), or just plain Ethernet. For ATM and Frame Relay based accesses, individual subscribers are typically identified by Virtual Circuit IDs. Subscribers connected over Ethernet-based remote access devices are usually identified by VLAN IDs or MPLS tags.

A BRAS typically acts as a network termination point and may be responsible for configuring services by assigning network parameters (such as IP addresses) to xDSL modems (which typically act as clients). The BRAS is typically the first IP hop from the client to the Internet.

The method comprises shutting down the port if the three following conditions are cumulatively met:
- the administrative status of the port is: port enabled (also referred to as "up" administrative status, as opposed to "down" administrative status when the port is disabled),
- the operational status of the port is: port disconnected (also referred to as "down" operational status, as opposed to "up" operational status when the port is connected), and
- there is no configured service (also referred to as "false" service status, as opposed to "true" service status when at least one service is configured).

The method may process each port of the multiplexer-dispatcher devicesequentially in order to make sure that no port of the DSLAM is powered unless it is necessary.

According to a second embodiment, the multiplexer-dispatcher device is a DSLAM.

According to a third embodiment, whenever one of the three statuses is obtained by the method according to the first or second embodiments, the corresponding condition is checked, and whenever such checked condition is not met, the obtainment of remaining statuses is aborted.

This is particularly advantageous when the method is supervised from a single entity monitoring many multiplexer-dispatcher devices or DSLAMs (possibly all DSLAMs of an operator). For example, if the method is carried out by a piece of software run centrally by a CPU, aborting the obtainment (and correlatively the check) of remaining statuses limits the number of tasks that need to be carried out by the CPU and the amount of data communication, thereby freeing some CPU and network resources, and also reducing power consumption. This solution can also be implemented when each DSLAM is individually monitored (i.e. one instance of the method monitors each DSLAM), or when only a few DSLAMs are supervised by each instance of the method, although the CPU and network resources saving is typically less critical.

The method can be carried on a continuous basis or only once in a while, for example once every day or so. In a possible embodiment, the method is carried out once every x hours with x an integer between 0 and 255, x being a parameter set by an operator. The values 0 and 255 are only exemplary boundaries, which are advantageous because they enable easy coding of x on one byte while covering a relevant range of values. Such embodiment is advantageous as it enables a good trade-off between constant polling and scarce polling. Constant polling could consume a substantial amount of energy and bandwidth, and accordingly substantially offset the very benefit of the method, while at the same time optimizing every situation in which the three conditions are met (albeit by a reduced factor). For example constant polling could detect 1.5% of situations in which the three conditions are met, and in such situations, it could reduce the power consumption by 61 %, leading to an overall power consumption optimization of 0.915%. On the other hand, scarce polling (e.g. running the method once per week for each DSLAM) could, in a possible scenario, detect only 0.8% of the situations in which the three conditions are met (because such situations may last only for a limited duration and occur between two pollings), but reduce power consumption in such situations by 79%, leading to an overall power consumption reduction of 0.632%. Between the two extremes, an optimal trade-off may consist in running the method every 5 hours (this is only an example), thereby detecting 1.3% of situations in which the three conditions are met, and in such situations, reducing the power consumption by 74%, leading to an overall power consumption optimization of 0.962%. The percentages and durations given above are only exemplary and may vary substantially depending on the equipment that is used, on the reliability of the modems, on the reliability of the electricity supplier, etc.

According to a fourth embodiment, a method according to any of the first to third embodiments first checks the administrative status of the port and is aborted if the administrative status of the port is: port disabled.

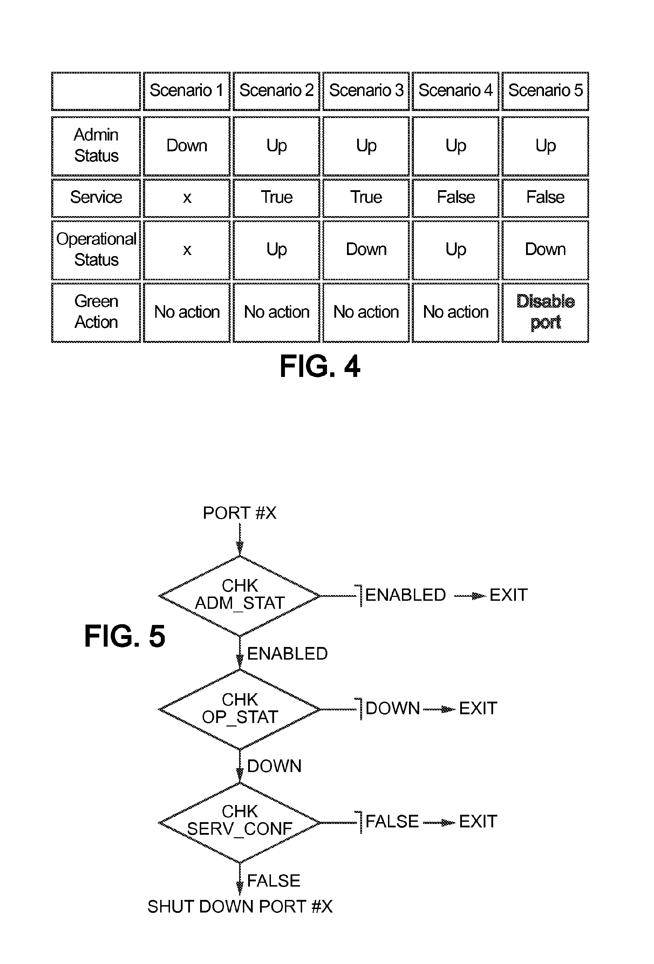

For example, as illustrated on Figure 5, in a first step CHK ADM_STAT, the method can check whether the administrative status of the port is enabled. If it is, the method can proceed to a second step CHK OP_STAT, otherwise (e.g. if the port is disabled) the method can exit. In a second step, the method can check whether the operational status of the port is "down" (i.e. the port is disconnected). If it is, the method can proceed to a third step CHK SERV_CONF, otherwise (e.g. if the port is connected) the method can exit. In a third step, the method can check whether any service is configured for the port. If no service is configured (status "False"), the method can shutdown the port, otherwise (e.g. if a service is configured, i.e. status "True", or if the status is anything else such as "Error") the method can exit.

In an alternative embodiment of the previous example, the second and third steps can be swapped, i.e. it is possible, after the first step, to check whether any service is configured for the port. If no service is configured (status "False"), the method can proceed to the last step, otherwise (e.g. if a service is configured, i.e. status "True", or if the status is anything else such as "Error") the method can exit. Then, during the last step, the method can check whether the operational status of the port is "down" (i.e. the port is disconnected). If it is, the method can shutdown the port, otherwise (e.g. if the port is connected) the method can exit.

In another possible embodiment, ports that are in "error" status can be shut down, but this is not always appropriate (in certain instances for debugging purpose it might be desired to not disturb the port, for example in order to better diagnose issues remotely). Therefore in a conservative approach they are not shut down. An example of such alternative is as follows. In a first step, the method can check whether the administrative status of the port is disabled. If it is, the method exits, otherwise (e.g. if the port is enabled) it proceeds to a second step. In a second step, the method can check whether the operational status of the port is "up" (i.e. the port is connected). If it is, the method can exit, otherwise (e.g. if the port is disconnected) it can proceed to a third step. In a third step, the method can check whether any service is configured for the port. If a service is configured (status "True"), the method can exit, otherwise (e.g. if no service is configured, i.e. status "False", or if the status is anything else such as "Error") the method can shutdown the port. It is also possible to swap the second and third steps (similarly to what is explained above for the previous alternative).

When the administrative status of the port is "disabled", it is normally impossible for the operational status to be "connected" (a status "connected" would have to be ignored as not being up to date, and normally a management system should ensure that such situation is not possible). However, it is theoretically possible for services to be configured, although this is of little use since services are not usable. This may happen if a port which was operational is disabled for some reason. Normally a disabled port is already powered down and not consuming energy (or at least consuming a minimal amount), it is therefore advantageous to check the administrative status first.

According to a fifth embodiment, when the three conditions of the first embodiment are not cumulatively met, no shutting down of the port is undertaken by the method according to any of the first to fourth embodiments. This means that no alternative criteria are implemented that could lead to a shutting down of the port for energy saving purpose. For example, as illustrated on Figure 4, in scenario 5, the method decides to shutdown the port (by disabling it), thereby carrying out a "green" action, while in scenarios 1, 2, 3 and 4 the method does not modify the status of the port. The following examples illustrate possible scenarios. Scenario 1 may correspond to a situation in which the port is deactivated (in this case, the operational status as well as the service configuration status may be irrelevant). Scenario 2 may correspond to a situation in which a service is provisioned and a CPE (Customer Premises Equipment, such as an xDSL modem) that is connected to the port is turned on. Scenario 3 may correspond to a situation in which a service is provisioned and a CPE is connected but switched off. Scenario 4 may correspond to a situation in which a CPE is connected to the port and turned on, but no service is provisioned. Scenario 5 may correspond to a situation in which no service is provisioned and no CPE is connected (or is connected but switched off).

According to a sixth embodiment, in which a multiplexer-dispatcher device (e.g. a DSLAM) comprises at least one aggregation card and each aggregation card comprises several downstream ports, the method according to any of the first to fifth embodiments shuts down an aggregation card of the multiplexer-dispatcher device if all ports of the aggregation card have been shut down. This is advantageous as the aggregation card itself can consume energy (in addition to the energy consumed by each of its ports).

According to a seventh embodiment, shutting down the port according to a method of any of the first to sixth embodiments does not change the administrative status of the port. That is to say, for the system the port is still, for example, in "enabled" administrative status, and also still in "disconnected" operational status and no configured service status. This is advantageous as it makes the power saving method transparent to the rest of the network architecture. It is possible to implement a software and/or hardware interface identifying, for example, that a system wishes to connect a port or configure a service of the port, and accordingly power up the port by the interface at that time if the port had been previously shut down by a method according to an embodiment of the invention. There can therefore be a fourth status for the port, for example a shutdown status which can be true or false. For example, it can be initially set to "false", and then set to "true" whenever a method according to an embodiment of the invention carries out a shutdown. It can be set to "false" again by the above interface. This seventh embodiment is also advantageous in that enabling a port may involve more than merely changing an administrative status parameter for the port from "disabled" to "enabled", and it is advantageous for the system not to have to go through the whole enablement process when this has already be done in the past and only a flag needs to be changed. Since the system is not necessarily able to distinguish between a disabled port that has never been enabled before and a port that has been enabled and merely shut down for power saving reasons, the fourth status above can be advantageous.

Alternatively, shutting down the port may simply comprise disabling it and setting the administrative status to "disabled". This is advantageous as it is simpler to implement, but this may generate useless tasks in the network architecture upon re-enablement of the port. Shutting down the port and deactivating the port are considered synonymous in the context of the disclosure.

According to an eighth embodiment, a computer program comprises one or more stored sequences of instructions that are accessible to a processor and which, when executed by the processor, cause the processor to perform the method according to any of the first to seventh embodiments (or any subset thereof).

The computer program may be executed from any computer. For example, the computer program may be the following program written in C# language, managing the ports of an ASAM 7300 (a type of DSLAM from Alcatel) - the program can be easily extended to other types of DSLAMs:

```
public void DisablePortsOnCard(Card card)
     IList<VarBind> vList = new List<VarBind>(3);
     IList<VarBind> responseList = null;
     foreach (Port port in card.Ports)
     {
          vList.Clear();
          // check AdminStatus, OperStatus and Service
          uint portIndex = CalculatePortIndex(1, 1, _slotNo, port.PortNo);
          uint index_ATM = CalculatePortIndex(1, 1, _slotNo, port.PortNo);
          vList.Add(new VarBind(new OID(".1.3.6.1.2.1.2.2.1.7." + portIndex.ToString()),
 Variable.CreateNull())); // ifAdminStatus
          vList.Add(new VarBind(new OID(".1.3.6.1.2.1.2.2.1.8." + portIndex.ToString()),
 Variable.CreateNull())); // ifOperStatus
          vList.Add(new VarBind(new OID(".1.3.6.1.2.1.37.1.7.1.13." +
 index_ATM.ToString()), Variable.CreateNull())); // service
          responseList = _sess.SendGet(vList);
          port.AdminState = responseList[0].Variable.Value;
          port.OperState = responseList[1].Variable.Value;
          port.OperState = responseList [1].Variable.Value;
          if (responseList[2].Variable != null)
          {
              port.Service = true;
          }
          else
          {
              port.Service = false;
          }
          vList.Clear();
          // disable port if needed
          if ((port.AdminState.Equals("up")) && (!port.ServicePort) &&
 (!port.OperState.Equals("up")))
          {
              vList.Add(new VarBind(new OID(ifAdminStatus + portIndex.ToString()), new
 Variable("2", VariableType.INTEGER32)));
              _sess.SendSet (vList);
              port.AdminState = "down";
          }
     }
```

According to a ninth embodiment, a non-transitory computer-readable storage medium stores a computer program according to the seventh embodiment. The storage medium can be for example a magnetic storage (e.g. hard disk drive) or a memory (such as a RAM, a ROM, an EEPROM, a FLASH, etc.). The storage medium can be, for example, embedded in a multiplexer-dispatcher device or more specifically in a DSLAM, or in a device communicating with the DSLAM, such as a server connected to the DSLAM through a network, or in a USB key or in a memory card (e.g. MMC, SD, miniSD, microSD, etc.) inserted in a slot of the DSLAM.

According to a tenth embodiment, a multiplexer-dispatcher device comprises a downstream port, a status gathering circuit, a status checking circuit, and a power reduction circuit.

The downstream port can be connected to an xDSL modem. The status gathering circuit is arranged to obtain:
- the administrative status of the port,
- the operational status of the port, and
- the service configuration status for the port.

The status gathering circuit can be a processor associated with software adapted to read statuses of the port. The status gathering circuit can also be an ad hoc electronic component, which can be based for example on cabled logic or on a FPGA. Statuses of the port can be stored in special addressable registers maintained by the multiplexer-dispatcher device, and the status gathering circuit can read relevant information from the register by invoking for example an assembly language READ instruction using as a first parameter the address of the register and as a second parameter the length of the register in bytes.

The status checking circuit is arranged to verify whether the following conditions are cumulatively met:
- the administrative status of the port is: port enabled,
- the operational status of the port is: port disconnected, and
- there is no configured service.

The status checking circuit can be a processor associated with software adapted to check statuses of the port. The status checking circuit can also be an ad hoc electronic component, which can be based for example on cabled logic or on a FPGA. Statuses of the port can be compared by using simple arithmetic comparison instructions available in assembly languages in cases statuses are stored as arithmetic values (e.g. one bit per status). Digital electronics can also be used to compare such statuses, by using bit comparators. Statuses can also be stored as strings (such as the string "False"). In such case, it is possible to check statuses by using string comparison functions (typically available only in higher level languages such as C, C++, C#, Java, Visual Basic, etc.). It is simple to implement a string comparison function in assembly language. For example for a zero terminated string it is possible to compare each byte of the string (starting from the first byte) until a byte differs or on the contrary until the same 0x00 byte is reached in both strings being compared (in which case the strings are equal). Alternatively, if the length of the string is known, and if the candidate string to be compared to the reference string has a proper length (i.e. the same as the expected length) it is possible to compare the number of bytes corresponding to the expected length (some strings are not zero terminated, instead their length is available). For known length strings (e.g. "Up", "Down", "False" and "True" are known in advance and have fixed lengths) digital electronics can also be easily used.

In case both the status gathering circuit and status checking circuit rely on a processor, they can share the same processor (e.g. the processor of a microcontroller or of a DSP).

The power reduction circuit is arranged to shutdown the port if the status checking circuit indicates that the three conditions are cumulatively met.

The power reduction circuit can be a processor associated with software adapted to shutdown the port. The status gathering circuit can also be an ad hoc electronic component, which can be based for example on cabled logic or on a FPGA. The power reduction circuit can invoke a port shutdown command of the multiplexer-dispatcher device. Alternatively, the power reduction circuit can send a shutdown signal on a specific pin of the multiplexer-dispatcher device (for example through a software interrupt of the power reduction circuit, or through a particular output pin of the power reduction circuit designed particularly for that purpose) in order to shutdown the corresponding port. Such signal may for example consist in setting the voltage of an output pin to VCC (e.g. 5V, or whatever other voltage is used in the power reduction circuit), either permanently, or for a predefined amount of time (e.g. more than 20 milliseconds).

In case the power reduction circuit comprises a processor and either of the status gathering circuit and status checking circuit relies on a processor as well, they can share the same processor (e.g. the processor of a microcontroller or of a DSP).

According to an eleventh embodiment, the multiplexer-dispatcher device of the tenth embodiment is a DSLAM.

According to a twelfth embodiment, the multiplexer-dispatcher device according to the tenth embodiment comprises at least one aggregation card, each aggregation card comprising several downstream ports. The power reduction circuit of the multiplexer-dispatcher device is arranged to shutdown an aggregation card of the multiplexer-dispatcher device if all ports of said aggregation card have been shut down.

According to a thirteenth embodiment, a computer for managing the power consumption of a multiplexer-dispatcher device (for example a DSLAM) comprises a status gathering circuit, a status checking circuit, and a power reduction circuit. The computer can be embedded in the multiplexer-dispatcher device (for example it can be a computer board inserted in the chassis of a DSLAM). The computer can also be a standalone computer such as a server connected to a group of DSLAMs through a network connection (e.g. Ethernet or ATM) and controlling the ports of all DSLAMs of the group. The computer can also be integrated in a BRAS (and control a group of DSLAMs connected to such BRAS). The computer can also be a smart card inserted in a smart card slot of the DSLAM, or any computer connected to the DSLAM by a local connection (e.g. USB, or local Ethernet connection).

The status gathering circuit of the computer is arranged to obtain:
- the administrative status of a downstream port of the multiplexer-dispatcher device,
- the operational status of the port, and
- the service configuration status for the port.

The status gathering circuit can be a processor associated with software adapted to read statuses of the port. The status gathering circuit can comprise a communication port (e.g. a serial interface such as RS232 or USB, or a network interface, or a local bus) in order to communicate with the multiplexer-dispatcher device. The status gathering circuit can also be an ad hoc electronic component, which can be based for example on cabled logic or on a FPGA. Statuses of the port can be stored in special addressable registers maintained by the multiplexer-dispatcher device, and the status gathering circuit can read relevant information from the register by invoking for example an assembly language READ instruction using as a first parameter the address of the register and as a second parameter the length of the register in bytes.

The status checking circuit is arranged to verify whether the following conditions are cumulatively met:
- the administrative status of the port is: port enabled,
- the operational status of the port is: port disconnected, and
- there is no configured service,

The status checking circuit can be a processor associated with software adapted to check statuses of the port. The status checking circuit can also be an ad hoc electronic component, which can be based for example on cabled logic or on a FPGA. Statuses of the port can be compared by using simple arithmetic comparison instructions available in assembly languages in cases statuses are stored as arithmetic values (e.g. one bit per status). Digital electronics can also be used to compare such statuses, by using bit comparators. Statuses can also be stored as strings (such as the string "False"). In such case, it is possible to check statuses by using string comparison functions (typically available only in higher level languages such as C, C++, C#, Java, Visual Basic, etc.). It is simple to implement a string comparison function in assembly language. For example for a zero terminated string it is possible to compare each byte of the string (starting from the first byte) until a byte differs or on the contrary until the same 0×00 byte is reached in both strings being compared (in which case the strings are equal). Alternatively, if the length of the string is known, and if the candidate string to be compared to the reference string has a proper length (i.e. the same as the expected length) it is possible to compare the number of bytes corresponding to the expected length (some strings are not zero terminated, instead their length is available). For known length strings (e.g. "Up", "Down", "False" and "True" are known in advance and have fixed lengths) digital electronics can also be easily used.

In case both the status gathering circuit and status checking circuit rely on a processor, they can share the same processor (e.g. the processor of a microcontroller or of a DSP).

The power reduction circuit is arranged to shutdown the port if the status checking circuit indicates that the three conditions are cumulatively met.

The power reduction circuit can be a processor associated with software adapted to shutdown the port. The status gathering circuit can comprise a communication port (e.g. a serial interface such as RS232 or USB, or a network interface, or a local bus) in order to communicate with the multiplexer-dispatcher device. The status gathering circuit can also be an ad hoc electronic component, which can be based for example on cabled logic or on a FPGA. The power reduction circuit can invoke a port shutdown command of the multiplexer-dispatcher device. Alternatively, the power reduction circuit can send a shutdown signal on a specific pin of the multiplexer-dispatcher device (for example through a software interrupt of the power reduction circuit, or through a particular output pin of the power reduction circuit designed particularly for that purpose) in order to shutdown the corresponding port. Such signal may for example consist in setting the voltage of an output pin to VCC (e.g. 5V, or whatever other voltage is used in the power reduction circuit), either permanently, or for a predefined amount of time (e.g. more than 20 milliseconds).

In case the power reduction circuit comprises a processor and either of the status gathering circuit and status checking circuit relies on a processor as well, they can share the same processor (e.g. the processor of a microcontroller or of a DSP).

According to a fourteenth embodiment, a multiplexer-dispatcher device comprising at least one aggregation card, each aggregation card comprising several downstream ports, the power reduction circuit of the computer according to the thirteenth embodiment is arranged to shutdown an aggregation card of such multiplexer-dispatcher device if all ports of said aggregation card have been shut down.

According to a fifteenth embodiment, a system comprises a computer according to the thirteenth or fourteenth embodiment and a multiplexer-dispatcher device such as a DSLAM. As illustrated on Figure 3, aDSLAM of the system may comprise several downstream ports (connecting to three CPEs through three downstream port xDSL lines DWN_STR). The DSLAM may be connected to a BRAS through an upstream port via an upstream line UP_STR (e.g. ATM link). The DSLAM may be connected to a computer COMP according to an embodiment of the invention through a communication line (such as an Ethernet link). The computer COMP may comprise a status gathering circuit SGC, a status checking circuit SCC, and a power reduction circuit PRC, the three of them sharing a common processor of the computer COMP.

The above embodiments are illustrative only and are not intended to limit the scope of the invention. In particular, the above embodiments often refer to xDSL modems, but any other type of CPE would be conceivable. The embodiments sometimes refer to particular protocols for communicating between the DSLAM and other components (e.g. ATM or Ethernet), but of course any functionally suitable protocol could be used (e.g. Frame Relay, etc.).

## Claims

1. A method for reducing power consumption of a multiplexer-dispatcher device, the method comprising, for a downstream port of the multiplexer-dispatcher device, obtaining at least one of:
- the administrative status of the port,
- the operational status of the port, and
- the service configuration status for the port,
and shutting down the port if the three following conditions are cumulatively met:
- the administrative status of the port is: port enabled,
- the operational status of the port is: port disconnected, and
- there is no configured service.

2. The method according to claim 1, wherein the multiplexer-dispatcher device is a DSLAM.

3. The method according to claim 1, wherein whenever one of the three statuses is obtained, the corresponding condition is checked, and whenever such checked condition is not met, the obtainment of remaining statuses is aborted.

4. The method according to claim 1, wherein the administrative status of the port is checked first and the method is aborted if the administrative status of the port is: port disabled.

5. The method according to claim 1, wherein if the three conditions are not cumulatively met, no shutting down of the port is undertaken.

6. The method according to claim 1, wherein, the multiplexer-dispatcher device comprising at least one aggregation card and each aggregation card comprising several downstream ports, an aggregation card of the multiplexer-dispatcher device is shut down if all ports of said aggregation card have been shut down.

7. The method according to claim 1, wherein shutting down the port does not change the administrative status of the port.

8. A computer program comprising one or more stored sequences of instructions that are accessible to a processor and which, when executed by the processor, cause the processor to perform the method according to claim 1.

9. A non-transitory computer-readable storage medium storing a computer program according to claim 8.

10. A multiplexer-dispatcher device comprising a downstream port, a status gathering circuit, a status checking circuit, and a power reduction circuit, wherein:
the status gathering circuit is arranged to obtain:
- the administrative status of the port,
- the operational status of the port, and
- the service configuration status for the port,
the status checking circuit is arranged to verify whether the following conditions are cumulatively met:
- the administrative status of the port is: port enabled,
- the operational status of the port is: port disconnected, and
- there is no configured service,
and the power reduction circuit is arranged to shutdown the port if the status checking circuit indicates that the three conditions are cumulatively met.

11. A multiplexer-dispatcher device according to claim 10, wherein the multiplexer-dispatcher device is a DSLAM.

12. A multiplexer-dispatcher device according to claim 10, wherein the multiplexer-dispatcher device comprises at least one aggregation card, each aggregation card comprising several downstream ports, the power reduction circuit being arranged to shutdown an aggregation card of the multiplexer-dispatcher device if all ports of said aggregation card have been shut down.

13. A computer for managing the power consumption of a multiplexer-dispatcher device, wherein the computer comprises a status gathering circuit, a status checking circuit, and a power reduction circuit, and wherein:
the status gathering circuit is arranged to obtain:
- the administrative status of a downstream port of the multiplexer-dispatcher device,
- the operational status of the port, and
- the service configuration status for the port,
the status checking circuit is arranged to verify whether the following conditions are cumulatively met:
- the administrative status of the port is: port enabled,
- the operational status of the port is: port disconnected, and
- there is no configured service,
and the power reduction circuit is arranged to shutdown the port if the status checking circuit indicates that the three conditions are cumulatively met.

14. A computer according to claim 13, wherein, the multiplexer-dispatcher device comprising at least one aggregation card, each aggregation card comprising several downstream ports, the power reduction circuit is arranged to shutdown an aggregation card of the multiplexer-dispatcher device if all ports of said aggregation card have been shut down.

15. A system comprising a computer according to claim 13 and a multiplexer-dispatcher device.
